# EUROPÄISCHE PATENTSCHRIFT

(11) **EP 1 371 038 B1**
(45) Veröffentlichungstag und Bekanntmachung des Hinweises auf die Patenterteilung: **28.12.2005**
(21) Anmeldenummer: 02735004.0
(22) Anmeldetag: 20.03.2002
(51) Int. Cl.: G07F 19/00

(54) **VERFAHREN UND VORRICHTUNG ZUM DURCHFÜHREN MINDESTENS EINES GEGEN ZAHLUNG EINES ENTGELTS ABZUWICKELNDEN GESCHÄFTS**
METHOD AND DEVICE FOR CARRYING OUT AT LEAST ONE COMMERCIAL TRANSACTION IN RETURN FOR PAYMENT
PROCEDE ET DISPOSITIF PERMETTANT D'EFFECTUER AU MOINS UNE TRANSACTION A TITRE ONEREUX

(30) Priorität: 22.03.2001 DE 10114237
(43) Veröffentlichungstag der Anmeldung: 17.12.2003
(73) Patentinhaber: Kruse-Brandao, Jaques, 22587 Hamburg (DE)
(72) Erfinder: KRUSE-BRANDAO, Jaques, 22587 Hamburg (DE); PLOPPA, Christian, 22609 Hamburg (DE)
(74) Vertreter: Heldt, Gert
(86) Internationale Anmeldenummer: PCT/DE2002/001018
(87) Internationale Veröffentlichungsnummer: WO 2002/077934

(56) Entgegenhaltungen:
- EP-A- 0 875 871
- EP-A- 1 065 634
- EP-A- 1 075 161
- WO-A-01/41081
- DE-A- 19 938 201
- DE-U- 20 014 381
- US-A- 5 668 876

## Beschreibung

Die Erfindung betrifft ein Verfahren zum Durchführen mindestens eines entgeltlichen Geschäfts, bei dem eine Entgeltzahlung durch einen computergesteuerten Zugriff auf ein Konto vorgenommen wird.

Darüber hinaus trifft die Erfindung eine Vorrichtung zum Durchführen mindestens eines gegen Zahlung eines Entgelts abzuwickelnden Geschäftes mit einem Computer, der einen Zugriff auf ein für die Zahlung des Entgelts geeignetes Konto besitzt.

Derartige Verfahren und Vorrichtungen beruhen auf dem Prinzip, das Geldüberweisungen von einem Eingabegerät aus computerunterstützt durchgeführt werden können. Zu diesem Zwecke wird auf einem Bildschirm ein im Computer abgespeichertes Überweisungsformular aufgerufen. Dieses wird hinsichtlich aller für die Überweisung wichtigen Daten ausgefüllt, beispielsweise des zu überweisenden Betrages, des Empfängers, der Empfängerbank, des Kontos der Empfängerbank und des gegebenenfalls anzugebenden Überweisungsgrundes. Die dadurch entstehenden Daten werden einem Buchhaltungscomputer zugeleitet, der die Überweisung vom Konto des Zahlenden auf das Konto des Zahlungsempfängers vornimmt.

Ein derartiges Verfahren hat sich in der Vergangenheit gut bewährt, eignet sich jedoch nur für die jenigen Fälle, in denen eine Identifizierung des Zahlenden gegenüber dem Buchhaltungscomputer möglich ist, beispielsweise mit Hilfe einer Identifikationskarte. Sollte diese Identifikationskarte gefälscht sein oder auf unrechtmäßige Weise in die Hand eines Überweisenden gekommen sein, so sind Überweisungsvorgänge möglich, die vom Inhaber des Kontos nicht gewünscht sind.

Insbesondere sind derartige Verfahren ungeeignet, um bei Einkäufen, bei denen eine Kaufsumme in bar entrichtet werden soll, der Zahlungsvorgang vorzunehmen. In diesen Fällen kann allenfalls die Zahlung mit Hilfe einer Identifikationskarte vorgenommen werden, die auf eine bekannte und übliche Weise darauf überprüft werden kann, ob sie zu Recht vom Zahlungsverpflichteten vorgelegt worden ist.

Diese Zahlungsvorgänge haben außer der Unsicherheit, dass die Identifikationskarte von Berechtigten vorgelegt worden ist, auch noch den Nachteil, dass der zu entrichtende Barbetrag im Regelfall erst einige Tage nach Durchführung des Zahlungsvorganges auf dem Konto des Zahlungsempfängers, beispielsweise eines Verkäufers gutgeschrieben wird. Schon wegen dieser zeitlichen Verzögerungen, während derer erhebliche Zinsnachteile zu Lasten des Zahlungsempfängers entstehen, sind diese Zahlungsvorgänge mit Hilfe einer Identifikationskarte unbeliebt, sodass sich viele Händler dem Zahlungsvorgang verschließen. Sie teilen ihren Kunden mit, dass sie nicht gewillt sind, eine Ware oder Dienstleistung zur Verfügung zu stellen, dessen Bezahlung unter der Verwendung von Identifikationskarten erfolgen soll.

Die EP 1 075 161 A zeigt ein Verfahren zur Zugangskontrolle eines Benutzers an einem Benutzerrechner zu einem Zugangsrechner, bei dem der Benutzer sich durch Eingabe eines Passwortes an dem Benutzerrechner, das von dem Benutzerrechner über eine Datenverbindung an einen Zugangsrechner übertragen wird, authentifiziert. Das Mobilfunk-Endgerät des Benutzers baut eine Verbindung über ein Mobilfunknetz zu einem Passwortrechner auf, der mit dem Zugangsrechner verbunden ist, und Passwortrechner empfängt von dem Mobilfunknetz im Zusammenhang mit der Verbindung mit dem Mobilfunk-Endgerät eine Benutzerkennung, der Passwortrechner ermittelt dann anhand der Benutzerkennung, welchem Benutzer das Mobilfunk-Endgerät zugeordnet ist, ausserdem ermittelt der Passwortrechner ein Passwort für den Benutzer und versendet es an den Zugangsrechner, weiterhin versendet der Passwortrechner das Passwort über das Mobilfunknetz an das Mobilfunk-Endgerät welches das Passwort ausgibt, der Benutzerrechner erfasst sodann das vom Nutzer händisch übertragene Passwort und übermittelt es an den Zugangsrechner (AS), welcher, wenn das von dem Benutzerrechner empfangene Passwort mit dem von dem Passwortrechner empfangenen Passwort übereinstimmt, dem Benutzerrechner Zugang zu einem Service gewährt.

Aufgabe der vorliegenden Erfindung ist es daher, ein Verfahren zum Durchführen mindestens eines entgeltlichen Geschäftes anzugeben, bei dem bei einem höchstmöglichen Grad von Sicherheit eine Zahlung eines angewiesenen Betrages innerhalb von kurzer Zeit beim Zahlungsempfänger erfolgt. Weitere Aufgabe der vorliegenden Erfindung ist es, den Zahlungsvorgang mit einfachen Geräten kostensparend und schnell durchzuführen.

Diese Aufgabe wird bei der erfindungsgemäßen Vorrichtung durch die Merkmale der unabhängigen Ansprüche 1 und 17 gelöst.

Diese Vorrichtung hat den Vorteil, dass sie auf Ausstattungen zurückgreift, die üblicherweise zur Ausstattung von Teilnehmern am Zahlungsverkehr gehören. Insbesondere gehört zu dieser Ausstattung ein Mobiltelefon, in dessen Speicher fernmündlich Daten eingelesen werden können. Darüberhinaus gehört zur Vorrichtung zur Durchführung des Verfahrens ein Computer, in dem Daten miteinander verglichen und ihre gegenseitige Übereinstimmung oder mindestens Vergleichbarkeit festgestellt werden kann. Schließlich wird auch noch ein Lesegerät eingesetzt, das beim Zahlungsempfänger aufgestellt ist und heut bereits im Regelfall zur Geschäftsausstattung gehört. Mit dieser Ausstattung können genaue Überprüfungen nicht nur der Berechtigung eines Zahlungsverpflichteten sondern auch dessen Bonität durchgeführt werden. Der Zahlungsverpflichtete erhält unmittelbar nach Durchführung dieser Überprüfungen die ihm zustehende Zahlung auf seinem Konto.

Gemäß einer bevorzugten Ausführungsform der Erfindung wird für jede Geldzahlung ein mit einer individuellen Kennung versehener Code festgelegt. Auf diese Weise wird verhindert, dass von einem Zahlungsvorgang zum nächsten der Code auch von Unberechtigten benutzt wird. Der dem jeweiligen Zahlungsvorgang zugrunde liegende Code verliert nach der Durchführung des Zahlungsvorganges seine Fähigkeit, als Nachweis für eine Verfügungsbefugnis über das Konto zu dienen.

Gemäß einer weiteren bevorzugten Ausführungsform der Erfindung wird nach jeder Entgeltzahlung der sich auf diese beziehende Code gelöscht. Auf diese Weise kann zu einem späteren Zeitpunkt nicht mehr nachvollzogen werden, welcher Code einer bestimmten Zahlung zugrunde gelegen hat. Dieser Code kann daher auch nicht als Anhaltspunkt für weitere Zahlungen dienen.

Gemäß einer weiteren bevorzugten Ausführungsform der Erfindung wird der Code in einem Server festgelegt. Dieser Server ist dafür ausgelegt, die benötigten Codes zu generieren und für den Zahlungsvorgang zur Verfügung zu stellen.

Gemäß einer weiteren bevorzugten Ausführungsform der Erfindung wird der Code willkürlich festgelegt. Auf diese Weise kann von einem unrechtmäßig in den Zahlungsverkehr eingreifenden nicht nachvollzogen werden, welcher Code für einen Zahlungsvorgang geeignet und ausgewählt wird. Da jeder Code nur dann die Berechtigung zum Zugriff auf ein Konto eröffnet, wenn er von dem Server in den den Zahlungsvorgang auslösenden Computer eingegeben wird, kann ausgeschlossen werden, dass irgendwelche anderen Codes in den Zahlungsvorgang von Unberechtigten eingeschleust werden, die auf diese Weise das Zahlungssystem für unrechtmäßige Zwecke missbrauchen wollen.

Gemäß einer weiteren bevorzugten Ausführungsform der Erfindung wird der Code in einen als Abgleicheinrichtung ausgebildeten Computer eingelesen. Dieser kann dem Code entnehmen, dass er ihm von dem Server durch Zugriff des Berechtigten zugespielt worden ist. Nur durch diesen Zugriff des Berechtigten wird von dem Server der Code generiert und über den Computer einerseits in die Abgleicheinrichtung und andererseits in das Mobiltelefon eingegeben. Dadurch wird vermieden, dass ein Code ausschließlich auf seine formale Ausstattung hin überprüft wird. Vielmehr erweist sich ob er geeignet ist, Zeugnis über die Rechtmäßigkeit eines Zugriffs auf den die Zahlung auslösenden Computer abzulegen.

Gemäß einer weiteren bevorzugten Ausführungsform der Erfindung wird eine Entgeltzahlung auf einen vorgegebenen Geldbetrag limitiert. Auch dadurch wird der eigentliche Zahlungsvorgang einer zusätzlichen Kontrolle unterworfen. Sollte der zur Disposition stehende Geldbetrag in einer für die Überprüfung erheblichen Weise über- bzw. unterschritten werden, so wird der Zahlungsvorgang gestoppt und ein Betrag für die Überweisung an den Zahlungsempfänger nicht freigegeben.

Gemäß einer weiteren bevorzugten Ausführungsform der Erfindung wird das Konto ausschließlich zur Durchführung von Entgeltzahlungen vorgehalten und auf das Konto von dem Computer zur Durchführung der Entgeltzahlung zugegriffen, nachdem er zuvor den vom mobilen Telefon angegebenen Code mit dem in der Abgleicheinrichtung gespeicherten Code miteinander verglichen und die vorgegebene Vergleichbarkeit der Codes erkannt hatte. Durch diese Maßnahme wird die Sicherheit des Überweisungsvorganges optimiert. Der Computer kann lediglich auf ein ganz bestimmtes Konto zugreifen, andere Konten stehen für seinen Zugriff nicht zur Verfügung. Darüber hinaus wird vor Durchführung der Entgeltzahlung durch Abgleichung der beiden Codes dem Zahlungsempfänger Sicherheit darüber verschafft, dass der Zahlende berechtigt ist, über das Konto in der vorgesehenen Höhe zu verfügen.

Gemäß einer weiteren bevorzugten Ausführungsform der Erfindung wird das mobile Telefon beim Ablesen des in ihm gespeicherten. Codes auf seine Identität hin überprüft. Zu diesem Zwecke ist in dem Computer ein bestimmtes Merkmal des Mobiltelefons eingegeben, das vom Ablesegerät des Zahlungsempfängers aufgenommen und in elektrische Daten umgesetzt wird. Diese werden dem Computer zugeleitet, der auf Grund dieser Daten eine Überprüfung vornimmt, ob das zu diesem Daten gehörende Mobiltelefon berechtigt ist, über Beträge zu verfügen, die auf dem vom Computer verwalteten Konto liegen.

Gemäß einer weiteren bevorzugten Ausführungsform der Erfindung wird mit dem mobilen Telefon über einen WAP-Server, der mit einer individuellen Kennung versehene Code zur Ausführung einer Entgeltzahlung aus dem Computer abgerufen. Auf diese Weise erfolgt eine sichere Verbindung zwischen dem Mobiltelefon und dem Computer, so dass durch unberechtigten Zugriff die Kommunikation zwischen dem Mobiltelefon und dem Computer nicht gestört werden kann.

Gemäß einer weiteren bevorzugten Ausführungsform der Erfindung wird bei der Eingabe des vom Mobiltelefon abgebenen Code in den Computer auch eine Bonitätsprüfung für das für die Entgeltzahlung benannte Konto durchgeführt. Diese Bonitätsprüfung erfolgt ausschließlich nach erfolgreicher Überprüfung der beiden Codes auf gegenseitiger Übereinstimmung. Auf diese Weise werden nach außen keine Kontenbewegungen an Unberechtigte herausgegeben.

Gemäß einer weiteren bevorzugten Ausführungsform der Erfindung ist der Computer mit einem Server über eine elektrische Verbindung verbunden und in dem Server ist ein mit einer individuellen Endung versehener Code generierbar, der über die Verbindung in den Computer einlesbar ist. Auf diese Weise kann mit relativ günstigen und einfachen Mitteln eine Vorrichtung geschaffen werden, mit der das erfindungsgemäße Verfahren einfach und gut handhabbar durchgeführt werden kann.

Gemäß einer weiteren bevorzugten Ausführungsform der Erfindung ist am Ort einer vorzunehmenden Entgeltzahlung ein Lesegerät vorgesehen, mit dem der mit der individuellen Kennung versehene Code vom Mobiltelefon lesbar ist. Dieses Lesegerät ist mit relativ einfachen Mitteln einrichtbar, beispielsweise einer Kamera, mit deren Hilfe nicht nur der auf ein Display des Mobiltelefons eingebbarer Code ablesbar und zur Überprüfung an den Computer abgebbar ist, sondern auch die Identität des verwendeten Mobiltelefons überprüfbar ist. Diese wird ebenso von dem auf das Lesegerät aufgelegten Mobiltelefon abgelesen und zur Überprüfung in den Computer gegeben.

Gemäß einer weiteren bevorzugten Ausführungsform der Erfindung ist das Lesegerät mit dem Computer über eine Datenleitung elektrisch verbunden, über die vom Lesegerät entsprechend dem gelesenen Code generierte Daten in den Computer einlesbar sind, die in eine im Computer vorgegebenen Abgleicheinrichtung mit dem im Computer gespeicherten Code auf ihr Autentizität überprüfbar sind. Diese Überprüfung des eingegebenen Codes macht die Zahlung, die vom Computer veranlasst wird, nicht nur sicher, sondern auch schnell. Auf diese Weise können die Beteiligten, beispielsweise als Kaufgeschäftes, schnell zu ihren gegenseitigen zu erbringenden Leistungen gelangen.

Gemäß einer weiteren bevorzugten Ausführungsform der Erfindung ist der Computer mit dem Konto zur Durchführung von Entgeltzahlungen elektrisch verbunden und eine Entgeltzahlung zugunsten eines begünstigten Kontos vorgesehen, das beim Vergleich des vom Mobiltelefon abgelesenen Codes von dem im Computer abgespeicherten Code sich als berechtigt erwiesen hat. Durch den unmittelbaren Eingriff des Computers in die elektrisch zugreifbaren Konten eines Zahlungsverpflichteten ergeben sich schnelle Zahlungsmöglichkeiten, die geeignet sind, einen Warenaustausch beispielsweise im Rahmen eines Kaufvertrages schnell vornehmen zu können.

Gemäß einer weiteren bevorzugten Ausführungsform der Erfindung ist das Konto auf eine vorgegebene Anzahl von Entgeltzahlungen limitiert. Auf diese Weise wird erreicht, dass eine zusätzliche Sicherheit gegen missbräuchliche Kontenbenutzung eingebaut wird. Jeder, der das vereinbarte Niveau überschreitende Zahlungsvollzug lässt erkennen, dass der den Zahlungsvorgang auslösende einen rechtmäßigen Zugriff auf das Konto, von dem er Verfügungen vornehmen will, nicht besitzt.

Gemäß einer weiteren bevorzugten Ausführungsform der Erfindung ist das Konto hinsichtlich der Höhe vornehmbarer Entgeltzahlungen limitiert. Auch durch diese Maßnahme kann eine schnelle Überprüfung stattfinden, ob der jeweilige Zugriff auf das Konto berechtigt oder unberechtigt erfolgt.

Gemäß einer weiteren bevorzugten Ausführungsform der Erfindung besteht der Code aus einer willkürlichen Zahl. Diese kann beispielsweise durch einen Zufallsgenerator generiert werden. Damit besteht keine Gesetzmäßigkeit für die im Code verwendeten Zahlen. Sie garantieren eine höchstmögliche Sicherheit.

Gemäß einer weiteren bevorzugten Ausführungsform der Erfindung besteht der Code aus mindestens zwei sich aneinander anschließenden Zahlengruppen. Diese erlauben eine vielfältige Sicherheitsüberprüfung, indem jede Zahl für sich und das Verhältnis der Zahlen zueinander überprüft und auf ihre Plausibilität im Computer untersucht werden.

Gemäß einer weiteren bevorzugten Ausführungsform der Erfindung besitzt der Code einen den Matrix Data Code des Mobiltelefons bezeichnenden Bestandteil. Durch Überprüfung dieses Matrix Data Code wird die Identität des Mobiltelefons festgestellt. Sollte diese nun dazu führen, dass Verfügungen zu Lasten eines Kontos mit einem Mobiltelefon vorgenommen worden ist, dessen Matrix Data Code von einer erwarteten Vorgabe abweicht, so wird der Überweisungsvorgang unterbrochen.

Weitere Einzelheiten der Erfindung ergeben sich auf Grund der nachfolgenden ausführlichen Beschreibung und der beigefügten Zeichnugen, in denen eine bevorzugte Ausführungsform der Erfindung beispielsweise dargestellt ist.

In den Zeichnungen zeigen:

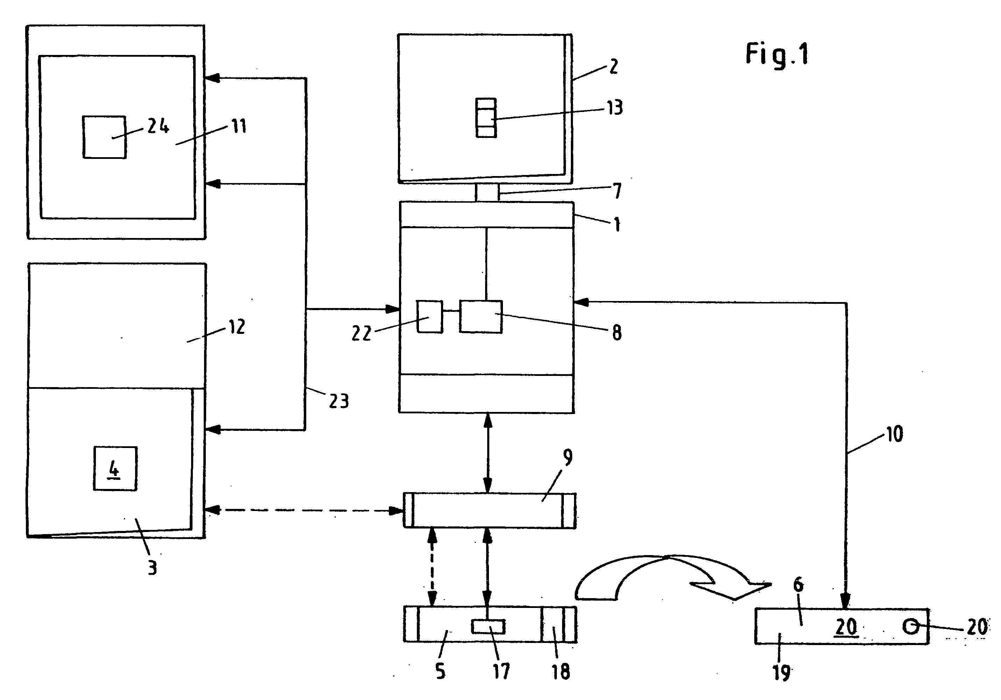

Fig. 1: ein Schema einer Vorrichtung und

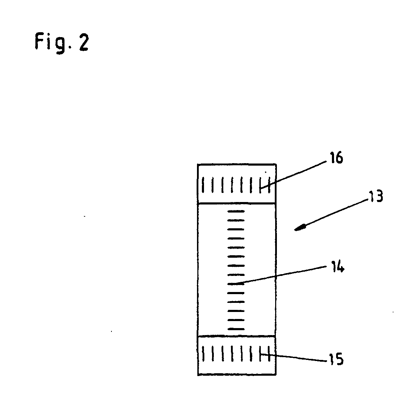

Fig. 2: ein Schema eines generierten Codes

Eine Vorrichtung zur Durchführung des Verfahrens besteht im Wesentlichen aus einem Computer (1), einem Server (2), einem bei einer Bank (3) geführten Konto (4), einem Mobiltelefon (5) sowie einem Lesegerät (6). Der Server (2) ist unmittelbar über eine Verbindng (7) mit dem Computer (1) gekoppelt. In dem Computer (1) befindet sich eine Abgleicheinrichtung (8), in die die Verbindung (7) eingeleitet ist.

Das Mobiltelefon (5) ist über einen WAP-Server (9) mit dem Computer (1) verbunden. Darüberhinaus ist das Lesegerät (6) mit dem Computer (1) über eine elektrische Leitung (10) verbunden. Diese elektrische Leitung (10) kann auch beispielsweise über das Internet durch Funk hergestellt werden.

Statt einer Bank (3) kann auch eine weitere Bank (11) oder ein anderes Kreditinstitut (12) mit dem Computer (1) verbunden sein.

Zur Einleitung eines Zahlungsvorganges greift ein nicht dargestellter Zahlungsverpflichteter mit Hilfe des Mobiltelefons (5) über den WAP-Server (9) auf den Computer (1) zu und veranlasst diesen, aus dem Server (2) einen verschlüsselten Code (13) abzurufen. Dieser verschlüsselte Code (13) besteht aus einer beispielsweise 15-stelligen Codeziffer (14), einer Bankleitzahl (15) sowie einer Händlerkennung (16). Dieser verschlüsselte Code (13) wird insbesondere hinsichtlich der Codeziffer (14) von dem Server (2) willkürlich gebildet. Dabei kann ein Zufallsgenerator eingesetzt werden, der im Server (2) integriert ist. Dieser erzeugt die Codeziffer (14) nach dem Zufallsprinzip des nicht dargestellten Zufallsgenerators.

Darüberhinaus dient die Bankleitzahl dazu, bei Aufruf des verschlüsselten Codes (13) die Bank (3) anzusprechen bzw. das Kreditinstitut (12) oder die Bank (11).

Die Bank (3) wird daraufhin von dem Computer (1) angesprochen und stellt diesem einen Zugriff auf das Konto (4) zur Verfügung. Im Rahmen dieses Kontos (4) kann der Zahlungsverpflichtete über das Mobiltelefon (5) Geldbeträge bei der Bank (3) abrufen. Dabei ist das Konto (4) in der Weise eingerichtet, dass für jeden einzelnen Zahlungsvorgang ein zuvor mit der Bank (3) abgesprochener Höchstbetrag zur Verfügung gestellt wird. Diese Absprache kann mit der Bank (3) bezüglich des Kontos (4) mit Hilfe des Mobiltelefons (5) herbeigeführt werden.

Darüberhinaus wird der Code (13) vom Computer (1) auch über den WAP-Server (9) in einen Speicher (17) des Mobiltelefons (5) eingelesen. Aus diesem Speicher (17) kann der verschlüsselte Code (13) auf einer Lesefläche (18) des Mobiltelefons (5) dargestellt werden.

Zur Einleitung eines Zahlungsvorganges beispielsweise bei einem Zahlungsempfänger (19) wird das Mobiltelefon (5) auf eine Lesefläche (20) des Lesegeräts (6) gelegt. Dabei liegt das Mobiltelefon (5) mit einer Lesefläche (18) unmittelbar auf der Lesefläche (20) des Lesegerätes (6), so dass beispielsweise mit Hilfe einer in das Lesegerät (6) eingebauten Kamera (21) die Lesefläche (18) des Mobiltelefons (5) von der Kamera (21) abgetastet werden kann. Dabei nimmt die Kamera (21) den in der Lesefläche (18) dargestellten Code (13) auf und wandelt diesen in elektrische Impulse um. Diese werden über eine elektrische Leitung (10) in den Computer (1) eingespeist. Sie gelangen in die Abgleicheinrichtung (8) und werden dort mit dem einem Speicher (22) des Computers (1) entnommenen verschlüsselten Code (13) verglichen. Dieser war in den Speicher (22) eingelesen worden, als er mit Hilfe des Mobiltelefons (5) vom Server (2) angefordert worden war.

In der Abgleicheinrichtung (8) werden der im Lesegerät (6) aus dem Mobiltelefon (5) abgelesene Code (13) mit dem im Speicher (22) enthaltenen und in die Abgleicheinrichtung (8) eingespeisten Code (13) miteinander verglichen. Bei Übereinstimmung der beiden Codes bzw. bei einer vorgegebenen Vergleichbarkeit dieser beiden Codes greift der Computer (1) auf das bei der Bank (3) geführte Konto (4) zu. Soweit dieses einen Betrag zur Auszahlung zur Verfügung hält, der demjenigen entspricht, der vom Zahlungsverpflichteten an den Zahlungsempfänger auszukehren ist, gibt der Computer (1) über seine mit der Bank (3) bestehende Verbindung (23) den vom Mobiltelefon (5) angegebenen Betrag zur Auszahlung an den Zahlungsempfänger frei. Die Auszahlung erfolgt unmittelbar zu Gunsten des in den Computer (1) eingegebenen Kontos, das über das Lesegerät (6) in den Computer (1) eingegeben wird. Wenige Augenblicke später ist der entsprechende Betrag dem Konto des Zahlungsempfängers gutgeschrieben worden..

Gleichzeitig mit der Eingabe des vom Mobiltelefon (5) abgelesenen Code (13) wird über die elektrische Leitung (10) auch eine Bonitätsprüfung des Zahlungsverpflichteten vorgenommen. Diese erfolgt in der Weise, dass der zur Auszahlung vorgesehene Betrag vom Computer (1) mit dem von der Bank (3) auf dem Konto (4) vorgehaltenen Betrag für eine Auszahlung verglichen wird. Liegt der für die Auszahlung an den Zahlungsempfänger ausgewiesene Betrag niedriger oder im Bereich des zur Auszahlung vom Konto (4) bereitgehaltenen Betrages, wird vom Computer (1) die Auszahlung dieses Betrages an Zahlungsempfänger freigegeben. Überschießt jedoch der zur Auszahlung an den Zahlungsempfänger vorgesehene Betrag den vom Konto (4) zur Auszahlung bereitgehaltenen Betrag erheblich, so erfolgt keine Zahlung an den Zahlungsempfänger. Vielmehr wird mit Hilfe des Computers (1) eine Rückfrage auf dem Mobiltelefon (5) erfolgen, so dass der über das Mobiltelefon (5) benachrichtigte Zahlungsverpflichtete darüber entscheiden kann, ob der über das Lesegerät (6) angeforderte Betrag an den Zahlungsempfänger ausgekehrt werden kann. Sollte der Zahlungsverpflichtete bereit sein, den gegenüber dem ursprünglich eingeplanten Betrag erhöhten Betrag an den Zahlungsempfänger auszukehren, so kann er mit Hilfe des Mobiltelefons (5) auf den Computer (1) zugreifen und diesen veranlassen, dass der erhöhte Betrag von dem Konto (4) zu Gunsten des vom Zahlungsempfänger angegebenen Kontos überwiesen wird. Andere Zahlungsmodalitäten sind im Rahmen des erfindungsgemäßen Verfahren möglich. Beispielsweise kann statt der Bank (3) auch die Bank (11) über ein Konto (24) in die Zahlung von Beträgen an einen Zahlungsempfänger eingebunden werden. Dieser Fall könnte beispielsweise eintreten, wenn sich bei einem Zugriff des Computers (1) auf das Konto (4) der Bank (3) herausstellt, dass dieses Konto auf Grund von mehreren Zugriffen temporär erschöpft ist. In diesem Falle könnte das Konto (24) der Bank (11) für eine Zahlung angesprochen werden. Diese Zahlung könnte im Rahmen der gleichen Modalitäten nach einem Abgleich des Codes (13) in der Abgleicheinrichtung (8) angesprochen werden. Sollte sich dabei herausstellen, dass eine Zahlung vom Konto (24) auf Grund der dort verfügbaren Beträge möglich ist, wird vom Computer (1) die Überweisung auf das Konto des Zahlungsempfängers wie oben bereits für das Konto (4) beschrieben wurde durchgeführt.

Statt einer Verbindung des Mobiltelefons (5) mit dem Computer (1) über den WAP-Server (9) können auch andere Verbindungen für die Kommunikation des Mobiltelefons (5) mit dem Computer (1) hergestellt werden, beispielsweise über das nicht dargestellte Internet.

Darüberhinaus ist es auch möglich, im Server (2) andere Codes (13) herzustellen, die sich jedoch jedenfalls hinsichtlich der Verschlüssselung ähnlich wie der Code (13) darstellen wird. Sie werden also alle eine Codeziffer (14) aufweisen, die willkürlich vom Server (2) hergestellt wird, ohne dass ein Zugriff auf die Art und Weise möglich ist, mit der der Server (2) willkürliche Ziffern als Code-Ziffern herstellt. Außerdem werden auch alle zur Verschlüsselung des Codes (13) dienenden Methoden insofern übereinstimmen, als sie lediglich für einen einzelnen Zahlungsvorgang den Zugriff auf die Konten (4), (24) eröffnen. Nach dem dieser Zugriff erfolgt ist, können weitere Verfügungen über die Konten (4), (24) lediglich dadurch beigeführt werden, dass der Server (2) veranlasst wird, eine neue Code-Ziffer zu generieren und in die Abgleicheinrichtung einerseits und das Mobiltelefon (5) andererseits einzugeben. Mit dieser neuen Code-Ziffer (14) läuft sodann das erfindungsgemäße Verfahren in gleicher Weise ab wie bereits geschildert.

Dieses Verfahren wurde anhand eines Mobiltelfons (5) erläutert, da dieses inzwischen eine weite Verbreitung gefunden hat und dem erfindungsgemäßen Verfahren einen großen Interessentenkreis zur Verfügung stellen wird. Denkbar sind allerdings auch andere Geräte, die im Rahmen des erfindungsgemäßen Verfahrens dasselbe leisten wie ein Mobiltelefon (5), das heißt sowohl die Möglichkeit eröffnen, den Server (2) zu veranlassen, eine Code-Ziffer (14) und damit den Code (13) zu generieren, diesen in den Computer (1) zum Abgleich in die Abgleicheinrichtung (8) einzuspeisen und gleichzeitig in das das Mobiltelefon (5) ersetztende Gerät einzulesen. Dieses benötigt zu diesem Zwecke einen Speicher.

Darüberhinaus benötigt das als Ersatz für das Mobiltelefon (5) in Frage kommende Gerät eine Lesefläche (18), auf der der Code (13) dargestellt werden kann und die eine Abtastung des Codes (13) ermöglicht, wenn das Gerät auf eine Lesefläche eines beim Zahlungsempfänger (19) aufgestellten Lesegeräts (6) aufgelegt wird. Zu denken ist in diesem Zusammenhang insbesondere an alle Arten von Handgeräten, die mit einer Lesefläche versehen sind und selbst identifizierbar sind, beispielsweise über einen Data Matrix Code.

Schließlich sind auch Zahlungsvermittlungen möglich bei denen auf ein Konto eines Kreditinstitutes (12) zugegriffen wird. In diesem Falle erfolgt eine Überprüfung des für die Zahlung zur Verfügung stehenden Kontos ausschließlich im Ranmen der für das Kreditinstitut eröffneten Kreditlinie.

## Patentansprüche

1. Verfahren zum Durchführen mindestens eines entgeltlichen Geschäftes, bei dem eine Entgeltzahlung durch einen computergesteuerten Zugriff auf ein Konto (4, 24) vorgenommen wird und eine Befugnis zur Verfügung über mindestens einen Teilbetrag dieses Kontos (4, 24) mit Hilfe eines Codes (13) erbracht wird der in eine Abgleicheinrichtung (8) und in ein mobiles Telefon (5) eingegeben wird und bei der Entgeltzahlung der im mobilen Telefon (5) gespeicherte Code (13) mit dem in der Abgleicheinrichtung (8) eingespeicherten Code (13) verglichen und bei einer vorgegebenen Vergleichbarkeit der miteinander verglichenen Codes (13) die Entgeltzahlung vorgenommen und eine Gegenleistung ausgekehrt wird, **dadurch gekennzeichnet, dass** der Code (13) bei jeder Entgeltzahlung mit einer jeweils individuellen Kennung versehen wird, der mit dieser individuellen Kennung versehene Code auf einem Display des mobilen Telefons (5) abgebildet und von einem auf das Display ausgerichteten Lesegerät (6) abgelesen und an die Abgleicheinrichtung (8) weitergeleitet wird, in der der Code und die individuelle Kennung mit dem in die Abgleicheinrichtung (8) eingespeicherten Code und der individuellen Kennung verglichen wird.

2. Verfahren nach Anspruch 1, **dadurch gekennzeichnet, dass** nach jeder Entgeltzahlung der sich auf diese beziehende Code (13) gelöscht wird.

3. Verfahren nach Anspruch 2, **dadurch gekennzeichnet, dass** der Code (13) in einem Server (2) festgelegt wird.

4. Verfahren nach Anspruch 3, **dadurch gekennzeichnet, dass** der Code (13) willkürlich festgelegt wird.

5. Verfahren nach Anspruch 3 oder 4, **dadurch gekennzeichnet, dass** der Code (13) in einen mit einer Abgleicheinrichtung (8) versehenen Computer (1) eingelesen wird.

6. Verfahren nach einem der Ansprüche 1 bis 5, **dadurch gekennzeichnet, dass** die Entgeltzahlung auf einen vorgegebenen Geldbetrag limitiert wird.

7. Verfahren nach Anspruch 6, **dadurch gekennzeichnet, dass** der vorgegebene Geldbetrag zur Vornahme der Entgeltzahlung auf einem Konto (4, 24) bereitgestellt wird.

8. Verfahren nach Anspruch 7, **dadurch gekennzeichnet, dass** das Konto (4, 24) zur Durchführung von Entgeltzahlungen vorgehalten wird und auf das Konto (4, 24) vom dem Computer (1) zur Durchführung der Entgeltzahlung zugegriffen wird, nachdem er zuvor den vom mobilen Telefon (5) eingegebenen Code mit dem in die Abgleicheinrichtung (8) abgespeicherten Code (13) miteinander verglichen und die vorgegebene Vergleichbarkeit der beiden Codes (13) erkannt hatte.

9. Verfahren nach Anspruch 8, **dadurch gekennzeichnet, dass** das Konto (4, 24) von mindestens einer Bank (3, 14) vorgehalten wird.

10. Verfahren nach Anspruch 8 oder 9, **dadurch gekennzeichnet, dass** das Konto (4, 24) auf eine vorgegebene Anzahl von Entgeltzahlungen limitiert wird.

11. Verfahren nach einem der Ansprüche 8 bis 10, **dadurch gekennzeichnet, dass** das Konto (4, 24) auf mindestens einen Zahlungsempfänger limitiert wird.

12. Verfahren nach einem der Ansprüche 1 bis 11, **dadurch gekennzeichnet, dass** das mobile Telefon (5) beim Ablesen des in ihm gespeicherten Code (13) auf seine Identität überprüft wird.

13. Verfahren nach Anspruch 12, **dadurch gekennzeichnet, dass** zur Überprüfung seiner Identität ein dem mobilen Telefon (5) eingegebener Data Matrix Code gelesen und zur Überprüfung in den Computer (1) eingegeben wird, in dem eine dem Data Matrix Code entsprechende Kennung eingespeichert ist.

14. Verfahren nach einem der Ansprüche 1 bis 13, **dadurch gekennzeichnet, dass** mit dem Computer (1) auf Konten (4, 24) von mindestens zwei Banken (3, 11) zugegriffen wird.

15. Verfahren nach einem der Ansprüche 1 bis 14, **dadurch gekennzeichnet, dass** mit dem mobilen Telefon (5) über einen WAP-Server (9) zur Ausführung einer Entgeltzahlung auf den Computer (1) zugegriffen wird.

16. Verfahren nach einem der Ansprüche 1 bis 15, **dadurch gekennzeichnet, dass** bei der Eingabe des vom mobilen Telefon (5) abgelesenen Code (13) in den Computer (1) auch eine Bonitätsprüfung für das für die Entgeltzahlung genannte Konto (4, 24) durchgeführt wird.

17. Vorrichtung zum Durchführen mindestens eines gegen Zahlung eines Entgelts abzuwickelnden Geschäftes mit einem Computer (1), der einen Zugriff auf ein für die Zahlung des Entgelt geeignetes Konto (4, 24) besitzt und in dem ein Code (13) gespeichert ist, der außerdem in einem mobilen Telefon (5) abgespeichert ist, das mit einem zum Ablesen geeigneten Display versehen ist, **dadurch gekennzeichnet, dass** zum Ablesen des im mobilen Telefon (5) gespeicherten Codes (13) ein Lesegerät (6) vorgesehen ist, das zum Ablesen einer im Display des mobilen Telefons (5) erscheinenden Mitteilung geeignet ist und zur Überleitung von gelesenen Daten mit dem Computer (1) elektronisch verbunden ist, in dem eine den gespeicherten Code (13) und seine individuelle Kennung mit den eingelesenen Daten vergleichende Abgleichvorrichtung (8) vorgesehen ist, die im Falle einer vorgegebenen Vergleichbarkeit des im Computer (1) gespeicherten Code (13) mit dem vom Lesegerät (6) gelesenen Code (13) und seiner Kennung den Zugriff des Computers (1) auf das Konto (4, 24) freigibt.

18. Vorrichtung an Anspruch 17, **dadurch gekennzeichnet, dass** der Computer (1) mit einem Server (2) über eine elektrische Verbindung (7) verbunden ist und in dem Server (2) ein mit einer vorgegebenen individuellen Kennung versehener Code (13) generierbar ist, der über die Verbindung (7) in den Computer (1) einlesbar ist.

19. Vorrichtung nach Anspruch 18, **dadurch gekennzeichnet, dass** der Computer (1) mit einem mobilen Telefon (5) elektrisch verbindbar ist, das einen Zugriff auf den im Computer (1) gespeicherten Code (13) besitzt.

20. Vorrichtung nach einem der Ansprüche 17 bis 19, **dadurch gekennzeichnet, dass** am Ort einer vorzunehmenden Entgeltzahlung ein Lesegerät (6) vorgesehen ist, mit dem der mit der individuellen Kennung versehene Code (13) vom mo-bilen Telefon (5) lesbar ist.

21. Vorrichtung nach einem der Ansprüche 17 bis 20, **dadurch gekennzeichnet, dass** das Lesegerät (6) mit dem Computer (1) über eine elektrische Leitung verbunden ist, über die vom Lesegerät (6) entsprechend dem gelesenen Code (13) generierte Daten in den Computer (1) einlesbar sind, die in einer im Computer (1) vorgesehenen Abgleicheinrichtung (8) mit dem im Computer (1) abgespeicherten Code (13) auf ihrer Autentizität überprüfbar sind.

22. Vorrichtung nach einem der Ansprüche 17 bis 21, **dadurch gekennzeichnet, dass** das Lesegerät (6) mit dem Computer (1) zur Prüfung der Bonität des in Anspruch genommenen Kontos (4, 24) verbunden ist.

23. Vorrichtung nach einem der Ansprüche 17 bis 22, **dadurch gekennzeichnet, dass** der Computer (1) mit dem Konto (4, 24) zur Durchführung von Entgeltzahlungen elektrisch verbunden und eine Entgeltzahlung zugunsten eines begünstigten Kontos vorgesehen ist, das beim Vergleich des vom mobilen Telefon (5) abgelesenen Codes (13) mit dem im Computer (1) abgespeicherten Code (13) sich als berechtigt erwiesen hat.

24. Vorrichtung nach Anspruch 23, **dadurch gekennzeichnet, dass** das Konto (4, 24) auf eine vorgegebene Anzahl von Entgeltzahlungen limitiert ist.

25. Vorrichtung nach Anspruch 23 oder 24, **dadurch gekennzeichnet, dass** das Konto (4, 24) hinsichtlich der Höhe vorzunehmender Entgeltzahlung limitiert ist.

26. Vorrichtung nach einem der Ansprüche 23 bis 25, **dadurch gekennzeichnet, dass** das Konto (4, 24) bei einer Bank (3, 11) geführt ist.

27. Vorrichtung nach einem der Ansprüche 23 bis 25, **dadurch gekennzeichnet, dass** ein Zugriff auf Konten (4, 24) von zumindest zwei Banken (3, 11) vorgesehen ist.

28. Vorrichtung nach einem der Ansprüche 17 bis 27, **dadurch gekennzeichnet, dass** der Code (13) aus einer willkürlichen Codeziffer (14) besteht.

29. Vorrichtung nach Anspruch 28, **dadurch gekennzeichnet, dass** der Code (13) aus einer von einem Zufallsgenerator generierten willkürlichen Codeziffer (14) besteht.

30. Vorrichtung nach Anspruch 28 oder 29, **dadurch gekennzeichnet, dass** die willkürliche Codeziffer (14) 15-stellig ist.

31. Vorrichtung nach einem der Ansprüche 28 bis 30, **dadurch gekennzeichnet, dass** der Code (13) aus einer willkürlichen Codeziffer (14) und einer Bankleitzahl (15) als individueller Kennung besteht.

32. Vorrichtung nach Anspruch 31, **dadurch gekennzeichnet, dass** die Bankleitzahl (15) im Code (13) der willkürlichen Codeziffer (14) vorausgestellt ist.

33. Vorrichtung nach einem der Ansprüche 28 bis 32, **dadurch gekennzeichnet, dass** der Code (13) als individuelle Kennung einen dem Matrix Data Code des mobilen Telefons (5) entsprechenden Bestandteil besitzt.

## Claims

1. A method of carrying out at least one payment transaction wherein a payment is effected by a computer-controlled access to an account (4, 24) and authorisation to take at least a partial amount of said account (4, 24) is produced by means of a code (13) which is inputted into a comparison device (8) and into a mobile telephone (5) and when the payment is made the code (13) stored in the mobile telephone (5) is compared to the code (13) stored in the comparison device (8) and with a predetermined comparability of the mutually compared codes (13) the payment is made and the corresponding service or product provided, **characterised in that** in each payment the code (13) is provided with a respective individual identification, the code provided with said individual identification is displayed on a display of the mobile telephone (5) and read out by a reading device (6) directed on to the display and passed to the comparison device (8) in which the code and the individual identification is compared to the code stored in the comparison device (8) and the individual identification.

2. A method according to claim 1 **characterised in that** after each payment the code (13) relating thereto is erased.

3. A method according to claim 2 **characterised in that** the code (13) is stored in a server (2).

4. A method according to claim 3 **characterised in that** the code (13) is randomly established.

5. A method according to claim 3 or claim 4 **characterised in that** the code (13) is read into a computer (1) provided with a comparison device (8).

6. A method according to one of claims 1 to 5 **characterised in that** the payment is limited to a predetermined monetary amount.

7. A method according to claim 6 **characterised in that** the predetermined monetary amount is made available for making the payment in an account (4, 24).

8. A method according to claim 7 **characterised in that** the account (4, 24) is held for making payments and access is made to the account (4, 24) by the computer (1) for making the payment after it had previously compared together the code inputted by the mobile telephone (5) with the code (13) stored in the comparison device (8) and had recognised the predetermined comparability of the two codes (13).

9. A method according to claim 8 **characterised in that** the account (4, 24) is held by at least one bank (3, 14).

10. A method according to claim 8 or claim 9 **characterised in that** the account (4, 24) is limited to a predetermined number of payments.

11. A method according to one of claims 8 to 10 **characterised in that** the account (4, 24) is limited to at least one payment recipient.

12. A method according to one of claims 1 to 11 **characterised in that** the mobile telephone (5) is checked in respect of its identity when the code (13) stored therein is read off.

13. A method according to claim 12 **characterised in that** for checking its identity a data matrix code inputted in the mobile telephone (5) is read and for checking inputted into the computer (1) in which an identification corresponding to the data matrix code is stored.

14. A method according to one of claims 1 to 13 **characterised in that** access is made with the computer (1) to accounts (4, 24) of at least two banks (3,11).

15. A method according to one of claims 1 to 14 **characterised in that** access is made to the computer (1) with the mobile telephone (5) by way of a WAP server (9) for making a payment.

16. A method according to one of claims 1 to 15 **characterised in that** in the input of the code (13) read from the mobile telephone (5) into the computer (1) a creditworthiness check is carried out for the account (4, 24) named for the payment.

17. Apparatus for carrying out at least one transaction to be conducted against payment of a monetary amount comprising a computer (1) which has an access to an account (4, 24) suitable for payment of the monetary amount and in which there is stored a code (13) which is also stored in a mobile telephone (15) provided with a display suitable for reading out, **characterised in that** for reading out the code (13) stored in the mobile telephone (15) there is provided a reading device (6) which is suitable for reading out a message appearing in the display of the mobile telephone (5) and for transmission of read data is electronically connected to the computer (1) in which there is provided a comparison device (8) which compares the stored code (13) and its individual identification to the read-in data and which in the case of a predetermined comparability of the code (13) stored in the computer (1) with the code (13) read by the reading device (6) and its identification enables the access of the computer (1) to the account (4, 24).

18. Apparatus according to claim 17 **characterised in that** the computer (1) is connected to a server (2) by way of an electrical connection (7) and a code (13) provided with a predetermined individual identification can be generated in the server (2), which code can be read into the computer (1) by way of the connection (7).

19. Apparatus according to claim 18 **characterised in that** the computer (1) can be electrically connected to a mobile telephone (5) which has an access to the code (13) stored in the computer (1).

20. Apparatus according to one of claims 17 to 19 **characterised in that** provided at the location of a monetary payment to be made there is a reading device (6) with which the code (13) provided with the individual identification can be read from the mobile telephone (5).

21. Apparatus according to one of claims 17 to 20 **characterised in that** the reading device (6) is connected to the computer (1) by way of an electric line, by way of which data generated by the reading device (6) in accordance with the read code (13) can be read into the computer (1), which data can be checked in a comparison device (8) provided in the computer (1), with the code (13) stored in the computer (1), in respect of the authenticity thereof.

22. Apparatus according to one of claims 17 to 21 **characterised in that** the reading device (6) is connected to the computer (1) for checking the creditworthiness of the account (4, 24) addressed.

23. Apparatus according to one of claims 17 to 22 **characterised in that** the computer (1) is electrically connected to the account (4, 24) for making payments and a payment is provided in favour of a beneficiary account which upon comparison of the code (13) read from the mobile telephone (1) with the code (13) stored in the computer (1) has proven to be legitimate.

24. Apparatus according to claim 23 **characterised in that** the account (4, 24) is limited to a predetermined number of payments.

25. Apparatus according to claim 23 or claim 24 **characterised in that** the account (4, 24) is limited in respect of the level of a payment to be made.

26. Apparatus according to one of claims 23 to 25 **characterised in that** the account (4, 24) is held at a bank (3, 11).

27. Apparatus according to one of claims 23 to 25 **characterised in that** there is provided access to accounts (4, 24) of at least two banks (3, 11).

28. Apparatus according to one of claims 17 to 27 **characterised in that** the code (13) comprises a random code number (14).

29. Apparatus according to claim 28 **characterised in that** the code (13) comprises a random code number (14) generated by a random generator.

30. Apparatus according to claim 28 or claim 29 **characterised in that** the random code number (14) is a 15-digit number.

31. Apparatus according to one of claims 28 to 30 **characterised in that** the code (13) comprises a random code number (14) and a bank sort code (15) as individual identification.

32. Apparatus according to claim 31 **characterised in that** the bank sort code (15) in the code (13) precedes the random code number (14).

33. Apparatus according to one of claims 28 to 32 **characterised in that** the code (13) as an individual identification has a constituent corresponding to the matrix data code of the mobile telephone (5).

## Revendications

1. Procédé pour la réalisation d'au moins une transaction à titre onéreux, selon lequel un paiement en contrepartie est effectué via un accès assisté par ordinateur à un compte (4, 24), une autorisation de disposer d'au moins une somme partielle dudit compte (4, 24) est délivrée à l'aide d'un code (13) qui est inscrit dans un dispositif de compensation (8) et un téléphone (5) mobile, lors du paiement le code (13) mémorisé dans le téléphone (5) mobile est comparé au code (13) mémorisé dans le dispositif de compensation (8) et, en présence d'une similitude prédéterminée des codes (13) comparés entre eux, le paiement est effectué et une prestation est délivrée, **caractérisé par le fait que** le code (13), à chaque paiement en contrepartie, est affecté d'un identifiant individuel, le code pourvu de l'identifiant individuel est affiché sur un afficheur du téléphone (5) mobile, est lu par un appareil de lecture (6) dirigé sur l'afficheur et est transmis au dispositif de compensation (8) dans lequel le code avec l'identifiant individuel est comparé au code mémorisé dans le dispositif de compensation et à l'identifiant individuel.

2. Procédé selon la revendication 1, **caractérisé par le fait qu'**après chaque paiement en contrepartie le code (13) relatif à celui-ci est effacé.

3. Procédé selon la revendication 2, **caractérisé par le fait que** le code (13) est déterminé dans un serveur (2).

4. Procédé selon la revendication 3, **caractérisé par le fait que** le code (13) est déterminé de manière arbitraire.

5. Procédé selon la revendication 3 ou 4, **caractérisé par le fait que** le code (13) est inscrit dans un ordinateur (1) pourvu d'un dispositif de compensation (8).

6. Procédé selon une des revendications 1 à 5, **caractérisé par le fait que** le paiement en contrepartie est limité à une somme d'argent prédéterminée.

7. Procédé selon la revendication 6, **caractérisé par le fait que** la somme d'argent prédéterminée est mise à disposition sur un compte (4, 24) pour l'exécution du paiement en contrepartie.

8. Procédé selon la revendication 7, **caractérisé par le fait que** le compte (4, 24) est ouvert pour l'exécution de paiements en contrepartie et que l'ordinateur (1), pour l'exécution du paiement en contrepartie, accède au compte (4, 24) après avoir préalablement comparé entre eux le code transmis par le téléphone (5) mobile et le code (13) mémorisé dans le dispositif de compensation (8) et reconnu la similitude prédéterminée entre les deux codes (13).

9. Procédé selon la revendication 8, **caractérisé par le fait que** le compte (4, 24) est ouvert dans au moins une banque (3, 14).

10. Procédé selon la revendication 8 ou 9, **caractérisé par le fait que** le compte (4, 24) est limité à un nombre prédéterminé de paiements.

11. Procédé selon une des revendications 8 à 10, **caractérisé par le fait que** le compte (4, 24) est limité à au moins un destinataire de paiement.

12. Procédé selon une des revendications 1 à 11, **caractérisé par le fait que** l'identité du téléphone (5) mobile est contrôlée lors de la lecture du code (13) mémorisé dans celui-ci.

13. Procédé selon la revendication 12, **caractérisé par le fait que** pour le contrôle de l'identité du téléphone (5) mobile, un code Data Matrix et lu et transmis à des fins de vérification à l'ordinateur (1) dans lequel un identifiant correspondant au code Data Matrix est mémorisé.

14. Procédé selon une des revendications 1 à 13) **caractérisé par le fait que** l'ordinateur (1) accède à des comptes (4, 24) d'au moins deux banques (3, 11).

15. Procédé selon une des revendications 1 à 14, **caractérisé par le fait qu'**avec le téléphone (5) mobile on accède à l'ordinateur (1) par l'intermédiaire d'un serveur WAP (9) pour l'exécution d'un paiement en contrepartie.

16. Procédé selon une des revendications 1 à 15, **caractérisé par le fait que** lors de l'entrée dans l'ordinateur (1) du code (13) lu dans le téléphone (5) mobile on procède à une vérification d'approvisionnement du compte (4, 24) indiqué pour le paiement en contrepartie.

17. Dispositif pour la réalisation d'au moins une transaction à titre onéreux avec un ordinateur (1) qui possède un accès à un compte (4, 24) adapté pour le paiement de la contrepartie et dans lequel est mémorisé un code (13), qui est également mémorisé dans un téléphone (5) mobile pourvu d'un afficheur adapté pour la lecture, **caractérisé par le fait qu'**il est prévu pour la lecture du code mémorisé dans le téléphone (5) mobile, un appareil de lecture (6) qui est prévu pour lire une information apparaissant sur l'afficheur du téléphone (5) mobile et est connecté par voie électronique, à des fins de transmission de données lues, à l'ordinateur (1) équipé d'un dispositif de compensation (8), qui compare le code (13) mémorisé et son identifiant individuel aux données lues et qui, en présence d'une similitude prédéterminée entre le code (13) mémorisé dans l'ordinateur (1) et le code lu par l'appareil de lecture (6) et son identifiant, autorise l'accès de l'ordinateur (1) au compte (4, 24).

18. Dispositif selon la revendication 17, **caractérisé par le fait que** l'ordinateur (1) est connecté à un serveur (2) par l'intermédiaire d'une ligne (7) électrique et qu'un code (13) affecté d'un identifiant individuel prédéterminé peut être généré dans le serveur (2), lequel code peut être inscrit dans l'ordinateur (1) via la liaison.

19. Dispositif selon la revendication 18, **caractérisé par le fait que** l'ordinateur (1) peut être connecté électriquement à un téléphone (5) mobile qui possède un accès au code (13) mémorisé dans l'ordinateur (1).

20. Dispositif selon une des revendications 17 à 19, **caractérisé par le fait qu'**il est prévu, sur le lieu d'un paiement en contrepartie à effectuer, un appareil de lecture (6) à l'aide duquel le code (13) affecté de l'identifiant individuel du téléphone (5) mobile peut être lu.

21. Dispositif selon une des revendications 17 à 20, **caractérisé par le fait que** l'appareil de lecture (6) est relié à l'ordinateur (1) par une ligne électrique, par l'intermédiaire de laquelle des données générées par l'appareil de lecture (6) conformément au code (13) lu peuvent être inscrites dans l'ordinateur (1), lesquelles données peuvent être contrôlées sur le plan de leur authenticité au moyen d'un dispositif de compensation (8) prévu dans l'ordinateur (1).

22. Dispositif selon une des revendications 17 à 21, **caractérisé par le fait que** l'appareil de lecture (6) est connecté à l'ordinateur (1) aux fins de contrôler l'approvisionnement du compte (4, 24) considéré.

23. Dispositif selon une des revendications 17 à 22^{e} l'ordinateur (1) est relié électriquement au compte (4, 24) aux fins de réaliser des paiements en contrepartie en faveur d'un compte à créditer qui a été validé lors de la comparaison du code (13) transmis par le téléphone (5) mobile avec le code (13) mémorisé dans l'ordinateur (1).

24. Dispositif selon la revendication 23, **caractérisé par le fait que** le compte (4, 24) est limité à un nombre prédéterminé de paiements en contrepartie.

25. Dispositif selon la revendication 23 ou 24, **caractérisé par le fait que** le compte (4, 24) est limité du point de vue du montant du paiement en contrepartie à effectuer.

26. Dispositif selon une des revendications 23 à 25, **caractérisé par le fait que** le compte (4, 24) est tenu par une banque (3, 11).

27. Dispositif selon une des revendications 23 à 25, **caractérisé par le fait qu'**il est prévu un accès à des comptes (4, 24) auprès d'au moins deux banques (3, 11).

28. Dispositif selon une des revendications 17 à 27, **caractérisé par le fait que** le code (13) est formé d'un nombre code (14) choisi arbitrairement

29. Dispositif selon la revendication 28, **caractérisé par le fait que** le code (13) est formé d'un nombre code (14) généré arbitrairement par un générateur de code aléatoire.

30. Dispositif selon la revendication 28 ou 29, **caractérisé par le fait que** le code (13) arbitraire (14) comporte 15 caractères.

31. Dispositif selon une des revendications 28 à 29, **caractérisé par le fait que** le code (13) est formé d'un nombre code (14) et d'un code de banque (15) comme identifiant individuel.

32. Dispositif selon la revendication 31, **caractérisé par le fait que** le code de banque (15) est placé en premier dans le code (13) du nombre code arbitraire (14).

33. Dispositif selon une des revendications 28 à 32, **caractérisé par le fait que** le code (13) en tant qu'identifiant individuel comporte une partie qui correspond au code Data Matrix du téléphone (5) mobile.
